Europäisches Patentamt

European Patent Office

Office européen des brevets

(19)

(11) Publication number : **0 503 817 A1**

(12) # EUROPEAN PATENT APPLICATION

(21) Application number : 92301796.6

(22) Date of filing : 03.03.92

(51) Int. Cl.⁵ : **H02K 17/36, H02K 47/26, H02K 16/00**

(30) Priority : **08.03.91 ES 9100592**

(43) Date of publication of application :
**16.09.92 Bulletin 92/38**

(84) Designated Contracting States :
**AT BE CH DE DK FR GB GR IT LI NL PT SE**

(71) Applicant : **Huarte Frances, Domingo
Hermanos Imaz, No. 1-120D 31002
Pamplona (ES)**

(71) Applicant : **Huarte Rico, Laura
Hermanos Imaz, No. 1-120D 31002
Pamplona (ES)**

(72) Inventor : **Huarte Frances, Domingo
Hermanos Imaz, No. 1-120D 31002
Pamplona (ES)**
Inventor : **Huarte Rico, Laura
Hermanos Imaz, No. 1-120D 31002
Pamplona (ES)**

(74) Representative : **Maguire, Peter Albert et al
P.A. Maguire & Co. 12, The Broadway
St. Ives, Cambridge PE17 4BN (GB)**

(54) **Rotary electromechanical arrangements.**

(57)   A rotary electromechanical arrangement has two component rotary electrical machines (1,2) each with multiphase rotor windings (4,6). The rotor phase windings (a,b,c ;d,e,f) of each of the component machines are connected together electrically in series in distinct pairs. Each pair comprises a different phase from each of the component machines (1,2). For three electrical phases, the rotor phase windings (a,b,c ;d,e,f) at each end of the series connections represent one of the same and opposite directions of rotation. When free-running as a converter, normal stator (5,7) voltages here relative proportionality with applied frequencies. Rotating fields in the stators (1,7) have one of the same and opposite directions of rotation.

Fig.1

EP 0 503 817 A1

The present invention relates to rotary electromechanical arrangments including converters.

## BACKGROUND

There is long-standing and continuing interest in improving the performance of rotary alternating current electrical machines, including as to flexibility and variation of speed of rotation of a driven shaft. Many arrangements and combinations of simple machines have been proposed.

One such arrangement is a combination of two asynchronous motors with rotor windings and slip rings, and the first motor's stator connected to mains alternating current supply and the second motor's stator connected to the slip rings of the first motor's rotor. Such an arrangement is known as two motors in cascade or tandem. Four asynchronous speeds are available, two corresponding to those of the individual motors and another two corresponding to connection in aiding (direct) or opposing (inverse) cascade. For each available speed it is possible to increase the slide band by using a variable resistor (rheostat) connected to the slip rings.

Such cascade arrangements were well known forty years ago, but have been largely superceded by systems such as the "Dahlander" arrangement for changing the number of poles, or for continuous regulation of speed, such as those by "Leblanc", "Kramer" and "Seherbius". The inconvenience of using systems employing slip rings and collectors means that, these days, there is increasing popularity for various fixed frequency installations based on electronic components, and for variable frequency using simple motors with squirrel cage rotors.

Related considerations apply to conversion of frequency or interconnection of supplies of different frequencies, at least for high and medium power ratings; and constant speed frequency changers based on electronic components can solve interchange of frequency for low and moderate power ratings.

Limitations of simple rotary machines arise for low speeds of rotation (for example below 300 r.p.m.) as large numbers of poles and thus large diameters can necessitate the use of speed multipliers or reducers. Similar difficulties arise for speeds above 3,000 r.p.m.

It is an object of this invention to provide alternative arrangements capable of offering advantages.

In accordance with one aspect of the present invention, a converter comprises two rotary machines for multiphase alternating current operation, preferably induction or asynchronous machines, with rotor windings and mounted relative to a single common shaft. Terminals of both rotor windings are connected together electrically, phase with phase, conveniently forming a closed electrical circuit. Advantageously the terminals of both rotor windings can be connected together electrically according to two different options, one with the same sequence of phases and the second option with the inverse sequence of phases. Also advantageously, the stators can be connected to two supplies with different frequencies; and the connection sequence of the phases can be effected in such a way that the rotating fields created in each stator are of the same direction or opposite directions.

The different operational options then permitted offer great versatility in many possible applications, some of which are mentioned shortly, without intention of being considered in any way limitative, and will later be explained in more detail. They include
– Generator motor of variable speed
– Generator motor with two speeds, asynchronous.
– Generator motor with two speeds, synchronised.
– Controllable interconnection between two supplies of different frequencies.

This variety of applications and/or various constructional features has/have many advantages, including:
– providing a robust machine having no brushes, collectors and slip rings,
– ready usability in hazardous environments often demanding intrinsic safety electrically,
– for low rotary speeds, designs with diameters less than for conventional machines,
– availability of two frequency-speed characteristics.

According to another aspect of the invention, there is provided a rotary electromechanical arrangement comprising two component rotary electrical machines each with multiple phase rotor windings and mounted on a common shaft, the rotor phase windings of each of the component machines being connected together electrically in series in distinct pairs, each said pair comprising a different phase from each of the component machines, and, for three electrical phases, the rotor phase windings at each end of the series connectors representing one of the same and opposite directions of rotation about the common shaft.

According to a further aspect of the invention, there is provided a rotary electromechanical arrangement comprising two rotary alternating current electrical component machines, of substantially the same nominal power mounted with a common axis, and each having rotor and stator windings the rotor windings of each component machine having the same number of phases and being connected together electrically in series, with each phase of one connected to a different phase of the other and representing a direction of rotation for each rotor relative to the common shaft the stators being operative with nominal voltages in a free-running state of the arrangement that must maintain between them a relationship proportional to the relationship of respective frequencies applied thereto.

Specific implementations for embodying this invention, are now described, by way of example, with reference to the accompanying diagrammatic drawings, in which:

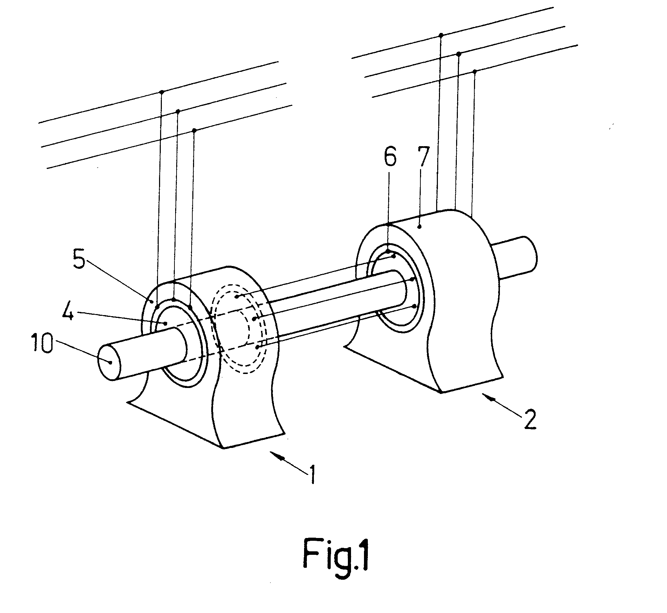

Figure 1 is a perspective schematic for mechanical and electrical connection of two simple rotary electric machines,

Figures 2 and 3 are circuit diagrams for alternative electrical connections of rotor windings and stators windings, and

Figures 4 and 5 are circuit diagrams for alternative electrical connections of windings including for a control machine.

References used are as follows:-

1. First rotary electrical machine
2. Second rotary electrical machine
3. Control or pilot electrical machine
4. Rotor of first electrical machine (1)
5. Stator of first electrical machine (1)
6. Rotor of second electrical machine (2)
7. Stator of second electrical machine (2)
8. Rotor of control or pilot machine (3)
9. Stator of control or pilot machine (3)
10. Common shaft
20. Changeover switch on the common shaft (10)

A, B, C - Terminals for respective phases of stator (5).

D, E, F - Terminals for respective phases of stator (7).

G, H, 1 - Terminals for respective phases of stator (9).

(It is to be taken that, if the terminals A, D, G are each connected to one phase; B, E, H each to another phase, and C, F, I each to the third phase of the same three-phase supply, the rotating fields created in the three stators 5, 7, 9 would have the same direction relative to the common shaft 10).

a, b, c - Terminals of respective phases of rotor (4).

d, e, f - Terminals of respective phases of rotor (6); d', e', f' being other ends of the same windings of the rotor (6).

g, h, e - Terminals of respective phases of rotor (8).

(It is to be taken that relative positions of the windings a, b, c of the rotor 4, the windings d, e, f of the rotor 6, and the windings g, h, i of the rotor 8 follow the same order of rotation with respect to the common shaft 10).

It will be appreciated that the exemplory illustrated embodiments all include two rotary machines with three-phase alternating current (1 and 2) of induction or asynchronous type mounted on a common shaft (10). The terminals (a, b, c) of the winding phases of the rotor (4) are shown connected to the terminals (d, e, f) of the rotor (6) in a correlative order dependent on some direction of rotation, leading to two possibilities depending on whether the directions of rotation chosen for each rotor are the same or opposite.

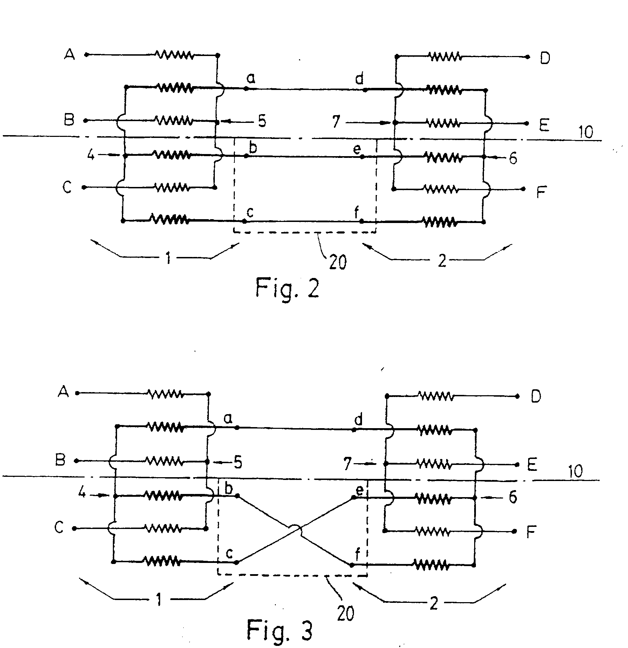

In Figure 2, the connections between phases of the rotors (4 and 6) represent the same direction of rotation, see (a, b, c) to (d, e, f), respectively.

In Figure 3, the connection between phases of the rotors (4 and 6) represent opposite directions of rotations, see (a, b, c) to (d, f, e), respectively.

A switch can be mounted on the shaft (10) to facilitate selective change from one form of connections to another, and can even be operable with the overall machine running, see dashed box (20).

The nominal powers of the individual machines (1 and 2) are taken to be approximately the same, but numbers of pairs of poles can be different. Preferably, relative setting of the rotors (4 and 6) on the shaft (10) is such that, in a certain position of the shaft (10), the neutral polar lines of each rotor (4 or 6) coincide with those of its respective stator (5 and 7), so as to avoid displacement of stator voltages for the same frequency in both. In practice, for converter, the stators (5 or 7) can be connected to alternating current supplies of different frequencies. For the stator (5) connected to a supply of given frequency and voltage, the frequency and voltage of the other stator (7) will vary correspondingly or in parallel, greater frequency corresponding to greater voltage.

The connection schemes of Figures 2 and 3 give rise to different behaviour/speeds for the same pairs of frequency applied to the stators (5 and 7).

For the rotor windings (4 and 6) connected phase-to-phase according to the same direction of rotation of the shaft (10), as in Figure 2, the speed of rotation of the shaft (10) will be equal to the difference between the frequencies applied to the stators divided by the difference between the number of pairs of poles of the simple machines (1 and 2). This arrangement is called herein a "high speed rotor".

For the rotor windings (4 and 6) connected phase-to-phase according to opposite directions of rotation of the shaft (10), as in Figure 3, the speed of the shaft (10) will be equal to the sum of the frequencies applied to in the stators (5 and 7) divided by the sum of the numbers of pairs of poles of the simple machines (1 and 2). This arrangement is called herein a "slow rotor".

Thus far, the stators (5 and 7) have been taken as energized so that rotating fields created in them have the same direction of rotation. However, it is also possible, for each of the two arrangements, namely the "high speed rotor" and the "slow rotor", to energize the stators (5 and 7) so that their rotating electromagnetic fields have opposite directions of rotation. Then,

    – the speed for the "high speed rotor" will be equal to the sum of the frequencies divided by the difference between the numbers of pairs of poles;
  – the speed for the "slow rotor" will be equal to the difference between the frequency divided by the sum of the pairs of poles;
  – the direction of rotation of the shaft (10) will correspond to that of the rotating field of the stator (5 or 7) energized with the higher frequency.

Any speeding up, specifically accelerating, or slowing, specifically braking, of the shaft (10) will induce a generator-like reaction, basically as a motor seeking to maintain a constant speed.

Effectively, arrangements hereof behave in much the same way as a simple induction machine with a rotor winding, and whose stator and rotor windings are connected to the same pair of frequencies as the stators of the arrangement hereof; and whose number of pairs of poles, for the "slow rotor", is the sum of the components of the arrangement; and, for the "high speed rotor", is the difference between the numbers of pairs of poles of the components of the arrangement.

It will usually not be necessary, that is for most actual applications to have all possibilities available, so advantageous simplifications are possible.

In cases where it is sufficient to use only one type of connection in the rotor, the rotor switch (20) may be omitted. If only the "slow rotor" option is required, the component machines (1 and 2) can have the same number of poles: indeed, they can be exactly the same. If only the "high speed rotor" option is required the numbers of pairs of poles of the component machines (1 and 2) must be different, but the machine with the greater number of poles should be connected to the supply with the higher applied frequency.

If one of the stators (5 or 7) can be operated permanently in short circuit, the winding of that stator can be substituted by a squirrel cage winding. Then, the arrangement is equivalent to a simple motor generator with a squirrel cage rotor.

If one of the stators (5 or 7) is to be operated permanently energized by direct current, that stator can be protected with salient poles. Then, the arrangement is equivalent to a synchronous motor/generator.

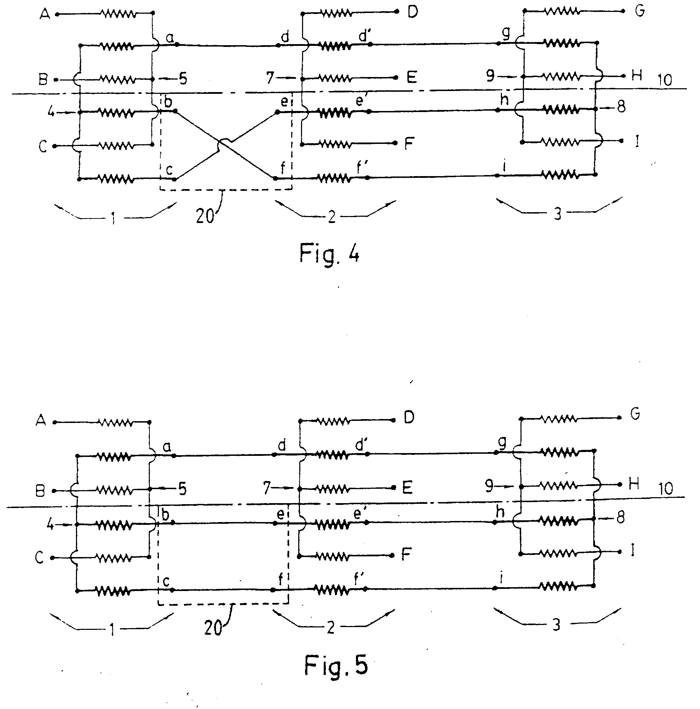

If operation concerns controlling transfer of electrical energy directly between two supplies of different frequency, i.e. without conversion to/from mechanical energy, it is possible to use a "slow rotor" arrangement, particularly with a third electric machine (3) mounted on the shaft (10) to perform a control function. Then, the supplies between which it is wished to transfer electrical energy are connected to the two stators (5 and 7) of the basic arrangement so as to create rotating fields having opposite directions of rotation relative to the shaft (10). The third rotor (8) is connected in series with the rotary assembly of the basic arrangment so that its rotating field is opposite to that of the rotation of the shaft (10), see Figure 4 and taking the frequency applied to the stator (5) as greater than that applied to the stator (7).

Available control is by delaying or advancing the rotor system more or less electrical degrees with regard to a free-running condition and according to energizing of the third stator (9). In order to minimize the power necessary for such control it is desirable for the frequency applied to the third stator (9) to be as low as practicable. This can be achieved by appropriate choice of the number of poles of each of the component machines for practicability relative to the frequencies of the supplies to be interconnected.

If the frequencies concerned are close to each other the speed of the shaft (10) tends towards zero, and the number of poles required could increase and put up the price of the machine excessively. Generally, however, the number of poles of the third machine is the same or less, starting from a "high speed rotor" arrangement. Series connection of the winding of the rotor (8) is shown in figure 5. The stators (5 and 7) are energized so that their rotating fields have opposite directions.

As to possible applications of embodiments of the invention, there is functional equivalence to a simple rotor winding induction motor, whether of high speed or low speed type. Consequently, theoretical applications are as for a simple induction and rotor winding machine. In practice, each case will be assessed by balancing possible extra cost against advantages available including:
  – absence of slip rings and brushes
  – inherent applicability in flammable environments
  – smaller diameter for a similar speed
  – availability of possible speed options ("high speed" and "slow" rotors)

The following short summary of some applications, should not be taken as limitative in character.

APPLICATION I - Variable speed motor generator

Speed for a particular arrangement (number of fixed poles and type of connection) depends on the sum or difference of the frequencies, and it is possible to obtain a variable speed by connecting one stator to mains (or other) power supply, normally of fixed frequency, and connecting the other stator to a variable, usually lower, frequency. Then, the variable frequency power necessary can be only a part of the total power consumed.

APPLICATION II - Asynchronous induction machine

An arrangement hereof can replace a simple asynchronous squirrel cage rotor and that is seen as particularly interesting for very slow speeds of rotation. Then, one of the stators can have a squirrel cage winding.

## APPLICATION III - Synchronised machine energized by direct current

An arrangement hereof can replace a synchronous machine whether for low speed operation or for operation in hazardous environments requiring intrinsic safety, or both. Then, a stator can be of salient poles type.

## APPLICATION IV - Selsyn transmission

A converter arrangement hereof lends itself to replace rotor winding motors in synchronised or Selsyn type transmissions, especially for transmission of large torques at low speeds or in environments with an explosion risk.

## APPLICATION V - Cascade etc., connections and flexible operation

Of particular interest, is the "chain" connection of several slow rotor arrangements with an overall functional operation represented by a single notional arrangment having a total of poles equal to the sum of the pairs of poles of all the output arrangements put in chain. This characteristic lends itself to application in relation to highly variable energy input, and very variable speeds, such as apply in collecting wind energy. Arrangements hereof can be operational in accordance with the mean speed of the wind in an interval of time, and it would be possible to select, for any given period, the best serial-parallel combination having regard to the total number of machines at the site concerned.

## APPLICATION VI - Controlled interchange of electrical energy between supplies of different frequencies

Interconnection between two supplies of different frequencies using two synchronised machines needs a totally rigid coupling in relation to both frequencies. If the supplies are of a much greater power than the synchronised machines, overload is inevitable if the relation between the frequencies of the currents in the stators is not maintained with complete exactitude. Interconnection using an asynchronous motor and synchronised generator has flexibility between frequencies but is not controllable, and increasing the transfer of energy inevitably leads to the frequency of the receiving supply diminishing. However, a converter arrangement hereof with its stators energized for opposite directions of rotations allows the power transferred between the energizing supplies to be controlled by means of an auxiliary machine coupled to the same shaft and with all the rotor circuits connected in series.

## Claims

1. A rotary electromechanical arrangement comprising two component rotary electrical machines (1,2) each with multiple phase rotor windings (4,6) and mounted on a common shaft (10), the rotor phase windings (a,b,c;d,e,f) of each of the component machines (1,2) being connected together electrically in series in distinct pairs, each said pair comprising a different phase (a,b,c,;d,e,f) from each of the component machines (1,2), and, for three electrical phases, the rotor phase windings (4,6) at each end of the series connections representing one of the same (Figs.2,5) and opposite (Figs. 3,4) directions of rotation about the common shaft (10).

2. A rotary electromechanical converter, comprising an arrangement according to claim 1, wherein, when the component machines (1,2) have their stators (5,7) connected to supplies of different frequencies, rotating fields in the stators (5,7) are one of the same and opposite directions of rotation about the common shaft (10).

3. A rotary electromechanical arrangement comprising two rotary alternating current electrical component machines (1,2), of substantially the same nominal power, mounted with a common axis and each having rotor (4,6) and stator (5,7) windings, the rotor windings (4,6) of each component machine having the same number of phases (a,b,c;d,e,f) and being connected together electrically in series, with each phase of one connected to a different phase of the other and representing a direction of rotation for each rotor (4,6) relative to the common axis (10), the stators (5,7) being operative with nominal voltages in a free-running state of the arrangement that must maintain between them a relationship proportional to the relationship of respective frequencies applied thereto.

4. A rotary electromechanical arrangement according to claim 3, wherein the component machines (1,2) have a different number of poles, and their rotor phase windings (4,6) are connected together for the same direction of rotation about the common axis (Figures 2,5).

5. A rotary electromechanical arrangement according to claim 3, wherein the component machines (1,2) have the same or a different number of poles, and have their rotor phase windings (4,6) connected in series together for opposite directions of rotation about the common axis, respectively (Figures 3,4).

6. A rotary electromechanical arrangement according to claim 3, 4 or 5, further comprising a switch (20) that permits selection of electrical connections between the rotor phase windings to be, for the two component machines (1,2), either both for the same direction of rotation of the common axis, (Figures 2,5) or for opposite directions of rotation about the common axis (Figures 3,4).

7. A rotary electromechanical arrangement according to any preceding claim, wherein the rotors (4,6) are set with respect to said common shaft, or a common shaft (10) with said axis, so that there is a position of the common shaft (10) where neutral polar lines of each rotor (4,6) coincide simultaneously with those of their respective stators (5,7).

8. A rotary electromechanical arrangement according to any one of claims 1 to 6, wherein the stator (5,7) of one of the component machines (1,2) is to be operative constantly in short circuit, and that stator winding is of a squirrel cage configuration.

9. A rotary electromechanical arrangement according to any one of claims 1 to 6, wherein the stator (5,7) of one of the component machines (1,2) is to be operative constantly fed by direct current, and that stator is of salient poles configuration.

10. A rotary electromechanical arrangement according to any one of claims 1 to 5, to be operative as a converter, further comprising a third rotary electrical machine (3) mounted on the common axis or shaft and providing a control function the third machine having the same number of phases of rotor windings (g,h,i) as the rotors (4,6) of the two component machines (1,2) and being connected electrically in series with the rotor phase windings (a,b,c;d,e,f) of the two component machines (1,2) but for a rotating field therein that is of opposite direction to actual rotation about the common axis or shaft (10).

11. A rotary electromechanical arrangement according to claim 10, wherein the stators (5,7) of the component machines (1,2) are connected to the supplies between which it is wished to interchange energy so that rotating fields created in them have opposite directions relative to the common shaft, and the number of poles of each of the machines (1,2) is selected relative to frequencies of the supplies so that the frequency for the third stator (9) can be as low as practicable.

Fig.1

Fig. 2

Fig. 3

Fig. 4

Fig. 5

**European Patent Office**

## EUROPEAN SEARCH REPORT

Application Number

EP    92 30 1796

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE TRANSACTIONS ON ENERGY CONVERSION. no. 2, June 1987, NEW YORK US pages 246 - 253; F. SHIBATA: 'Speed control system for brushless cascade induction motors in control range of slips s1 > 1 and s2 > 1' * right column, paragraph 1; figures 1B,2 * | 1-3,5 | H02K17/36 H02K47/26 H02K16/00 |
| X | EP-A-0 084 717 (THE GARRETT CORPORATION) * page 13, line 10 - page 14, line 4; figures 1,2 * | 1-4 | |
| A | | 9 | |
| X | US-A-3 975 646 (KILGORE ET AL.) * column 3, line 48 - column 4, line 51; figure 1 * | 1-3,5 | |
| A | | 10 | |
| X | AT-B-338 384 (ELIN-UNION) * page 4, line 5 - line 17; figures * | 1 | |
| A | | 7,8 | TECHNICAL FIELDS SEARCHED (Int. Cl.5) |
| A | DE-C-524 537 (KRUPP) * the whole document * | 6 | H02K H02P H02J |
| A | SOVIET INVENTIONS ILLUSTRATED Section EI, Week 8630, 8 August 1986 Derwent Publications Ltd., London, GB; Class X, AN 86-195553/30 & SU-A-1 198 681 (MARTYNYUKVS) 15 December 1985 * abstract * | 9 | |
| A | US-A-3 531 701 (F. SHIBATA) * figure 1 * | 6,10 | |
| A | GB-A-244 039 (SIEMENS) * the whole document * | 10 | |

The present search report has been drawn up for all claims

| Place of search | Date of completion of the search | Examiner |
|---|---|---|
| THE HAGUE | 17 JUNE 1992 | ZANICHELLI F. |

EPO FORM 1503 03.82 (P0401)